(19) **Europäisches Patentamt / European Patent Office / Office européen des brevets**

(11) **EP 3 220 702 B1**

(12) **EUROPEAN PATENT SPECIFICATION**

(45) Date of publication and mention
of the grant of the patent:
**01.04.2020 Bulletin 2020/14**

(21) Application number: **15859033.1**

(22) Date of filing: **31.03.2015**

(51) Int Cl.:
*H04W 72/04* (2009.01)        *H04W 92/12* (2009.01)
*H04W 88/10* (2009.01)

(86) International application number:
**PCT/CN2015/075576**

(87) International publication number:
**WO 2016/074419 (19.05.2016 Gazette 2016/20)**

(54) **METHODS AND DEVICES FOR DOWNLINK BANDWIDTH ALLOCATION**

DOWNLINK-BANDBREITENZUWEISUNGSVERFAHREN UND -VORRICHTUNGEN

PROCÉDÉS ET DISPOSITIFS D'AFFECTATION DE BANDE PASSANTE DE LIAISON
DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2014 CN 201410636924**

(43) Date of publication of application:
**20.09.2017 Bulletin 2017/38**

(73) Proprietor: **ZTE Corporation
Shenzhen City, Guangdong Province 518057 (CN)**

(72) Inventor: **YANG, Yong
Shenzhen
Guangdong 518057 (CN)**

(74) Representative: **Ligi, Stefano et al
GLP S.r.l.
Viale Europa Unita, 171
33100 Udine (IT)**

(56) References cited:
**CN-A- 102 006 628        CN-A- 102 572 962
CN-A- 103 313 313        CN-A- 103 718 639
US-A1- 2013 272 130        US-A1- 2013 336 121**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present disclosure relates to the field of communication, and in particular to methods and devices for allocating a downlink bandwidth.

**Background**

In a process of constructing a Universal Mobile Telecommunications System (UMTS) commercial network, operators usually plan for each base station (e.g., Node B or eNodeB (also referred to as eNB)) an end-to-end (E2E) transmission bandwidth from a Radio Network Controller (RNC) to the base station, for example, an Iub E2E transmission bandwidth (for the convenience of description, the bandwidth is referred to as $B_{E2E}$ hereinafter), and conduct test and verification on the transmission bandwidth.

The Iub E2E transmission bandwidth is an important parameter. The RNC side needs to correctly configure the parameter according to actual bandwidth resources of the transmission network at the Iub interface. On the RNC side, the parameter is referred to as a path bandwidth of the base station.

If the configuration value of a path bandwidth of a certain base station is larger than the actual bandwidth, Stream Control Transmission Protocol (SCTP) link broken is likely to occur to the Iub interface of the base station, thus seriously affecting wireless services and causing network failure.

If the configuration value of a path bandwidth of a certain base station is smaller than the actual value, the bandwidth of the Iub interface cannot be fully used, and precious Iub interface bandwidth resource is wasted.

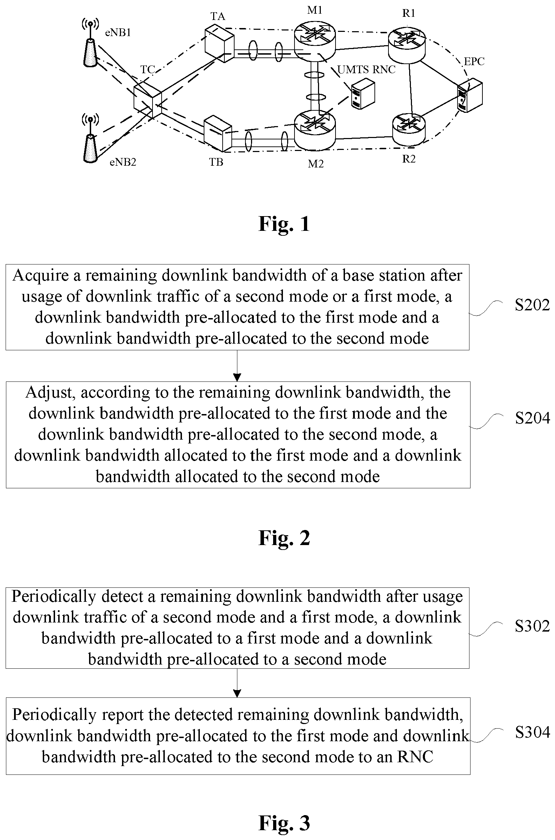

In order to reduce the cost of network construction, many base stations newly constructed by operators are multi-mode base stations, that is, base stations that simultaneously support multiple wireless modes. Here, UMTS/Long Term Evolution (LTE) multi-mode base station is taken as an example. Fig. 1 shows a diagram of networking connection of UL multi-mode base stations according to a related telecommunication technology. As shown in Fig. 1, the multi-mode base station usually conducts common transmission of data streams of various modes. The term "multi-mode common transmission" means that transmission paths of data streams of various modes in a base station overlap with each other, which may lead to a situation that various modes compete to use bandwidth resources of mobile backhaul network. Take a certain commercial outfield in Europe as an example, the multi-mode base station is a UMTS/LTE base station, the UL multi-mode base station is simultaneously connected with a UMTS controller and an EPC network of the LTE. In Fig. 1, network elements such as Serving GPRS Support Node (SGSN) and Gateway GPRS Support Node (GGSN) in UMTS core network are omitted. The eNBs are UL multi-mode base stations. Each eNB is connected with a layer 2 switch (TC) through one-hop microwave or multi-hop microwave. The eNBs cooperate with the UMTS RNC to provide UMTS services, and the eNBs cooperate with the EPC to provide LTE services. A part of eNBs (such as eNB1 in Fig. 1) take M1 as a main gateway. Under a normal condition, the path for UMTS data stream of eNB1 is eNB1-TC-TA-M1-UMTS RNC, while the path for LTE data stream of eNB1 is eNB1-TC-TA-M1-R1-EPC. The path of the UMTS data stream overlaps with the path of the LTE data stream in eNB1-TC-TA-M1.

In the uplink direction, data sent by eNB1 are divided after reaching M1. For example, UMTS data are sent to the UMTS RNC directly connected with M1, while LTE data are first sent to R1 and are forwarded to EPC by R1. In the downlink direction, after the UMTS data stream sent to eNB1 by the UMTS RNC and the LTE data stream sent to eNBs by EPC converge in M1, the converged data stream is transmitted to eNB1 along the overlapping transmission path M1-TA-TC-eNB1. The transmission path from eNB1 to M1 is eNB1-TC-TA-M1 and is shared by multiple modes such as the UMTS and the LTE. According to a transmission networking scheme, an Ethernet port of eNBs is divided into two VLANs, i.e., VLAN1 and VLAN2, where VLAN1 is used for bearing UMTS services, while VLAN2 is used for bearing LTE services.

According to the analysis based on a traffic model of wireless services, downlink traffic of a base station may usually be much larger than uplink traffic of the base station, thus the situation that the downlink traffic of various modes competes to use a downlink bandwidth is the most prominent.

However, for the downlink traffic, each base station has two data sources, for example, one may be UMTS RNC, and the other may be LTE EPC (logic network elements included may be SGW of media plane and MME of control plane). The UMTS RNC and the LTE EPC are two different logic network elements, and the UMTS and the LTE have to compete to use transmission bandwidth resources.

Transmission bandwidth bottlenecks usually exist on transmission devices in transmission path from a base station to a controller. To prevent congestion in the transmission network, operators usually plan for each base station an end-to-end transmission bandwidth from the base station to the controller (for the convenience of description, the bandwidth is referred to as $B_{E2E}$ hereinafter). When the sum of UMTS data traffic from the UMTS RNC to eNB1 (referred to as $S_u$ hereinafter) and LTE data traffic from the EPC to eNB1 (referred to as $S_{LTE}$ hereinafter) is larger than BE2E, congestion occurs in the transmission network, causing loss of transmission packet, deterioration of user experience for wireless services, and worsen of wireless network Key Performance Indicator (KPI). In brief, when $S_u + S_{LTE} > B_{E2E}$, wireless network KPI degrades.

To prevent transmission congestion, bandwidth control needs to be respectively conducted on the downlink data traffic $S_u$ and $S_{LTE}$ in the two network elements of the UMTS and the EPC. Take eNB1 in Fig. 1 as an example, assuming that the $B_{E2E}$ of eNB1, that is, the end-to-end bandwidth of path eNB1-TC-TA-M1, is 50Mbps. A problem on how to conduct efficient bandwidth control to the downlink data traffic arises.

A downlink bandwidth of 20Mbps may be planned for UMTS data of eNB1 and a downlink bandwidth of 30Mbps may be planned for LTE data of eNB1. Correspondingly, on the UMTS RNC, a path bandwidth of 20Mbps is configured to eNB1 network element, and on the EPC, a path bandwidth of 30Mbps is configured to the eNB1 network element. Under such static allocation of the downlink bandwidth, for eNB1,

$S_u < 20Mbps$, $S_{LTE} < 30Mbps$

$$\text{So } S_u + S_{LTE} < B_{E2E} = 50Mbps$$

Therefore, when other conditions are normal, transmission congestion is not likely to occur to eNB1.

The above static allocation method for downlink bandwidth may prevent transmission congestion, but the utilization ratio of $B_{E2E}$ is not high, since for a certain eNB1, UMTS users and LTE users accessing to eNB1 vary dynamically over time, and $S_u$ and $S_{LTE}$ triggered by the users that vary dynamically also vary over time.

Assuming that in the base station eNB1, in a certain period, the bandwidth allocated to the UMTS has run out, but there is idle bandwidth in the bandwidth allocated to the LTE, for example, there is only 10Mbps of $S_{LTE}$ while $S_u = 20Mbps$, then

the sum of the downlink bandwidth=10+20=30Mbps.

In this specific period, the utilization ratio of $B_{E2E}$ is only 30/50=60%, and 20Mbps of precious $B_{E2E}$ are wasted.

Currently, in view of the problems of transmission congestion or bandwidth resource waste existed when different modes of a multimode base station compete to use a downlink bandwidth resource, no effective solution has been provided.

Document US2013/272130 A1 discloses a method for allocating a downlink bandwidth according to the state of the art as described above.

## Summary

The invention is defined in the independent claims. Preferred embodiments are defined in the dependent claims.

Some embodiments of the present disclosure provide methods and devices for allocating a downlink bandwidth to at least solve the problems of transmission congestion or bandwidth resource waste existed when different modes of a multimode base station compete to use a downlink bandwidth resource.

According to an example of the present disclosure, a method for allocating a downlink bandwidth is provided, which may include the following acts. A remaining downlink bandwidth of a base station after usage of downlink traffic of a second mode or a first mode, a downlink bandwidth pre-allocated to the first mode and a downlink bandwidth pre-allocated to the second mode are acquired. A downlink bandwidth allocated to the first mode and a downlink bandwidth allocated to the second mode are adjusted according to the remaining downlink bandwidth, the downlink bandwidth pre-allocated to the first mode and the downlink bandwidth pre-allocated to the second mode.

In an example, the act that the downlink bandwidth allocated to the first mode and the downlink bandwidth allocated to the second mode are adjusted may include the following acts. The downlink bandwidth allocated to the first mode and the downlink bandwidth allocated to the second mode are adjusted based on a predetermined allocation principle according to the remaining downlink bandwidth, the downlink bandwidth pre-allocated to the first mode and the downlink bandwidth pre-allocated to the second mode.

In an example, the act that the downlink bandwidth allocated to the first mode and the downlink bandwidth allocated to the second mode are adjusted according to the remaining downlink bandwidth, the downlink bandwidth pre-allocated to the first mode and the downlink bandwidth pre-allocated to the second mode may include the following acts. An amount of the remaining downlink bandwidth after usage of the downlink traffic of the second mode is compared with an amount of the downlink bandwidth pre-allocated to the first mode, and a larger amount in a comparison result is determined as the downlink bandwidth allocated to the first mode. Alternatively, an amount of the remaining downlink bandwidth after usage of the downlink traffic of the first mode is compared with an amount of the downlink bandwidth pre-allocated to the second mode, and a larger amount in a comparison result is determined as the downlink bandwidth allocated to the second mode.

According to another example of the present disclosure, a method for allocating a downlink bandwidth is further provided, which may include the following acts. A remaining downlink bandwidth after usage of downlink traffic of a second mode and a first mode, a downlink bandwidth pre-allocated to the first mode and a downlink bandwidth pre-allocated to the second mode are periodically detected. The detected remaining downlink bandwidth, downlink bandwidth pre-allocated to the first mode and downlink bandwidth pre-allocated to the second mode are periodically reported to an RNC. The remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode.

In an example, after reporting the detected remaining downlink bandwidth, downlink bandwidth pre-allocated to the first mode and downlink bandwidth pre-allocated to the second mode to the RNC, the method may further include the following acts. An adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode, which is sent by the RNC is received. Data are transmitted according to the received adjusting result.

According to another example of the present disclosure, a device for allocating a downlink bandwidth is provided, including: an acquiring module, arranged to acquire a remaining downlink bandwidth of a base station after usage of downlink traffic of a second mode or a first mode, and acquire a downlink bandwidth pre-allocated to the first mode and a downlink bandwidth pre-allocated to the second mode; and an adjusting module, arranged to adjust, according to the remaining downlink bandwidth, the downlink bandwidth pre-allocated to the first mode and the downlink bandwidth pre-allocated to the second mode, a downlink bandwidth allocated to the first mode and a downlink bandwidth allocated to the second mode.

In an example, the adjusting module includes an adjusting sub-module, arranged to adjust, based on a predetermined allocation principle according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode.

In an example, the adjusting sub-module includes at least one of:
a first determining unit, arranged to compare an amount of the remaining downlink bandwidth after usage of the downlink traffic of the second mode with an amount of the downlink bandwidth pre-allocated to the first mode, and determine a larger amount in a comparison result as the downlink bandwidth allocated to the first mode; or a second determining unit, arranged to compare an amount of the remaining downlink bandwidth after usage of the downlink traffic of the first mode with an amount of the downlink bandwidth pre-allocated to the second mode, and determine a larger amount in a comparison result as the downlink bandwidth allocated to the second mode.

According to another example of the present disclosure, a device for allocating a downlink bandwidth is provided, including: a detecting module, arranged to periodically detect the remaining downlink bandwidth after usage of downlink traffic of a second mode and a first mode, and detect a downlink bandwidth pre-allocated to the first mode and a downlink bandwidth pre-allocated to the second mode; and an reporting module, arranged to periodically report the detected remaining downlink bandwidth, downlink bandwidth pre-allocated to the first mode and downlink bandwidth pre-allocated to the second mode to an RNC. The remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode.

In an example, the device may further include: a receiving module, arranged to receive an adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode, which is sent by the RNC; and a data transmitting module, arranged to transmit data according to the received adjusting result.

Through the technical solutions provided by the embodiments of the present disclosure, a remaining downlink bandwidth of a base station after usage of downlink traffic of a second mode or a first mode, a downlink bandwidth pre-allocated to the first mode and a downlink bandwidth pre-allocated to the second mode are acquired; and a downlink bandwidth allocated to the first mode and a downlink bandwidth allocated to the second mode is adjusted according to the remaining downlink bandwidth, the downlink bandwidth pre-allocated to the first mode and the downlink bandwidth pre-allocated to the second mode. The problems of transmission congestion or bandwidth resource waste existed when different modes of a multimode base station compete to use a downlink bandwidth resource are solved, and the utilization ratio of the downlink bandwidth is improved while congestion is prevented, thereby achieving the effect of improving user experience.

## Brief Description of the Drawings

The drawings described here are intended to provide further understanding of the present disclosure and constitute a part of the application. The exemplary embodiments of the present disclosure and description thereof are intended to explain the present disclosure and do not limit the present disclosure. In the drawings:

Fig. 1 shows a diagram of networking connection of UL multi-mode base stations according to a related communication technology;

Fig. 2 shows a first flowchart of a method for allocating a downlink bandwidth according to an embodiment of the present disclosure;

Fig. 3 shows a second flowchart of a method for allocating a downlink bandwidth according to an embodiment of the present disclosure;

Fig. 4 shows a first block diagram of a device for allocating a downlink bandwidth according to an embodiment of the present disclosure;

Fig. 5 shows a first block diagram of a device for allocating a downlink bandwidth according to an exemplary embodiment of the present disclosure;

Fig. 6 shows a second block diagram of a device for allocating a downlink bandwidth according to an exemplary embodiment of the present disclosure;

Fig. 7 shows a second block diagram of a device for allocating a downlink bandwidth according to an embodiment of the present disclosure;

Fig. 8 shows a third block diagram of a device for allocating a downlink bandwidth according to an exemplary embodiment of the present disclosure; and

Fig. 9 shows a flowchart of interaction of an lub audit response signal according to an embodiment of the present disclosure.

## Detailed Description of the Embodiments

Hereinafter, the present disclosure is described in detail with reference to the drawings and in combination with the embodiments. It may be appreciated that in the case of no conflict, the embodiments in the application and features in the embodiments can be combined with each other.

An embodiment provides a method for allocating a downlink bandwidth. Fig. 2 shows a first flowchart of a method for allocating a downlink bandwidth according to an embodiment of the present disclosure. As shown in Fig. 2, the procedure includes the following acts.

At act 202, a remaining downlink bandwidth of a base station after usage of downlink traffic of a second mode or a first mode, a downlink bandwidth pre-allocated to the first mode and a downlink bandwidth pre-allocated to the second mode are : acquired.

At act 204, a downlink bandwidth allocated to the first mode and a downlink bandwidth allocated to the second mode are adjusted according to the remaining downlink bandwidth, the downlink bandwidth pre-allocated to the first mode and the downlink bandwidth pre-allocated to the second mode.

Through the above acts, the remaining downlink bandwidth of a base station after usage of downlink traffic of a second mode or a first mode, a downlink bandwidth pre-allocated to the first mode and a downlink bandwidth pre-allocated to the second mode are acquired; and the downlink bandwidth allocated to the first mode and the downlink bandwidth allocated to the second mode are adjusted according to the remaining downlink bandwidth, the downlink bandwidth pre-allocated to the first mode and the downlink bandwidth pre-allocated to the second mode. The above base station may be a multi-mode base station and may include two wireless modes. By virtue of the technical solution above, the problems of transmission congestion or bandwidth resource waste existed when different modes of a multimode base station compete to use a downlink bandwidth resource are solved, and the utilization ratio of the downlink bandwidth is improved while congestion is prevented, thereby achieving the effect of improving user experience.

There may be multiple ways for adjusting the downlink bandwidth allocated to the first mode and the downlink bandwidth allocated to the second mode. In an exemplary embodiment, the downlink bandwidth allocated to the first mode and the downlink bandwidth allocated to the second mode may be adjusted in a following manner. The downlink bandwidth allocated to the first mode and the downlink bandwidth allocated to the second mode may be adjusted based on a predetermined allocation principle according to the remaining downlink bandwidth, the downlink bandwidth pre-allocated to the first mode and the downlink bandwidth pre-allocated to the second mode. The adjustment may be applied to the downlink bandwidth of two modes, i.e., the first mode and the second mode. The adjustment may also be applied to the downlink bandwidth of more than two modes. The following three adjustment ways may be applied. For example, an amount of the remaining downlink bandwidth may be compared with an amount of the downlink bandwidth pre-allocated to the first mode among the multimode, and a larger amount in a comparison result may be determined as the downlink bandwidth allocated to the first mode. As another example, it may be judged, according to respective remaining downlink bandwidths after usage of the downlink bandwidths under the multiple modes, whether the downlink bandwidth needed by the first mode is smaller than the respective remaining downlink bandwidths after usage of the downlink bandwidths under the multiple modes, and when the judging result is positive, a downlink bandwidth, among the respective remaining downlink bandwidths after usage of the downlink bandwidths under the multiple modes, that is closest to the downlink bandwidth needed by the first mode may be determined as the downlink bandwidth allocated to the first mode.

As another example, it may be judged, according to the respective remaining downlink bandwidths after usage of the downlink bandwidths under the multiple modes, whether the downlink bandwidth needed by the first mode is smaller than the respective remaining downlink bandwidths after usage of the downlink bandwidths under the multiple modes, and when the judging result is negative, determining the sum of at least two downlink bandwidths, among the respective remaining downlink bandwidths after usage of the downlink bandwidths under the multiple modes, that is closest to the downlink bandwidth needed by the first mode as the downlink bandwidth allocated to the first mode.

When the adjustment is applied to the downlink bandwidth of two modes, the act that the downlink bandwidth allocated to the first mode and the downlink bandwidth allocated to the second mode are adjusted according to the remaining downlink bandwidth, the downlink bandwidth pre-allocated to the first mode and the downlink bandwidth pre-allocated to the second mode may include the following acts. An amount of the remaining downlink bandwidth after usage of the downlink traffic of the second mode is compared with an amount of the downlink bandwidth pre-allocated to the first mode, and a larger amount in a comparison result is determined as the downlink bandwidth allocated to the first mode. Alternatively, an amount of the remaining downlink bandwidth after usage of the downlink traffic of the first mode is compared with an amount of the downlink bandwidth pre-allocated to the second mode, and a larger amount in a comparison result is determined as the downlink bandwidth allocated to the second mode.

The embodiment of the present disclosure provides a method for allocating a downlink bandwidth. Fig. 3 shows a second flowchart of a method for allocating a downlink bandwidth according to an embodiment of the present disclosure. As shown in Fig. 3, the procedure includes the following acts.

At act 302, a remaining downlink bandwidth after usage downlink traffic of a second mode and a first mode, the downlink bandwidth pre-allocated to the first mode and the downlink bandwidth pre-allocated to the second mode are periodically detected.

At act 304, the detected remaining downlink bandwidth, downlink bandwidth pre-allocated to the first mode and downlink bandwidth pre-allocated to the second mode are periodically reported to an RNC. In the embodiment, the remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode.

Though the above acts, the problems of transmission congestion or bandwidth resource waste existed when different modes of a multimode base station compete to use a downlink bandwidth resource in a related telecommunication technology are solved, and the utilization ratio of the downlink bandwidth is improved while congestion is prevented, thereby achieving the effect of improving user experience.

After reporting the detected remaining downlink bandwidth, downlink bandwidth pre-allocated to the first mode and downlink bandwidth pre-allocated to the second mode to the RNC, the method may further include the following acts. An adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode is received from the RNC; and data are transmitted according to the received adjusting result.

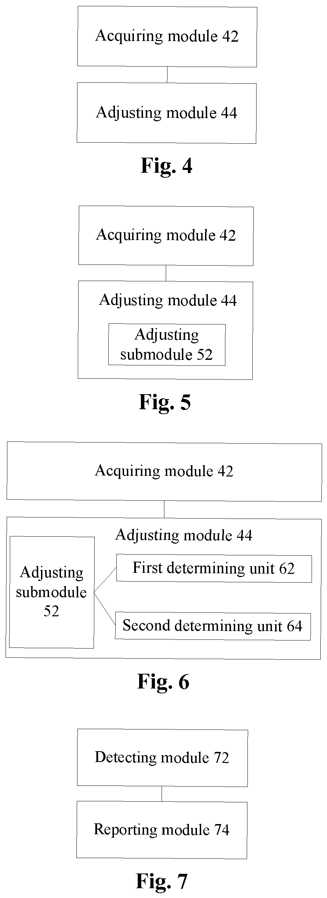

The embodiment of the present disclosure provides a device for allocating a downlink bandwidth. Fig. 4 shows a block diagram of a device for allocating a downlink bandwidth according to an embodiment of the present disclosure. As shown in Fig. 4, the device may include an acquiring module 42 and an adjusting module 44. Each module is briefly described hereinafter.

The acquiring module 42 is arranged to acquire a remaining downlink bandwidth of a base station after usage of downlink traffic of a second mode or a first mode, and acquire a downlink bandwidth pre-allocated to the first mode and a downlink bandwidth pre-allocated to the second mode.

The adjusting module 44 is arranged to adjust, according to the remaining downlink bandwidth, the downlink bandwidth pre-allocated to the first mode and the downlink bandwidth pre-allocated to the second mode, a downlink bandwidth allocated to the first mode and a downlink bandwidth allocated to the second mode.

Fig. 5 shows a first block diagram of a device for allocating a downlink bandwidth according to an exemplary embodiment of the present disclosure. As shown in Fig. 5, the adjusting module 44 may include:

an adjusting sub-module 52, arranged to adjust, based on a predetermined allocation principle according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode.

Fig. 6 shows a second block diagram of a device for allocating a downlink bandwidth according to an exemplary embodiment of the present disclosure. As shown in Fig. 6, the adjusting sub-module 52 may include at least one of:

a first determining unit 62, arranged to compare an amount of the remaining downlink bandwidth after usage of the downlink traffic of the second mode with an amount of the downlink bandwidth pre-allocated to the first mode, and determine a larger amount in a comparison result as the downlink bandwidth allocated to the first mode; or

a second determining unit 64, arranged to compare an amount of the remaining downlink bandwidth after usage of the downlink traffic of the first mode with an amount of the downlink bandwidth pre-allocated to the second mode, and determine a larger amount in a comparison result as the downlink bandwidth allocated to the second mode.

Another embodiment of the present disclosure further provides a device for allocating a downlink bandwidth. Fig. 7 shows a second block diagram of a device for allocating a downlink bandwidth according to an embodiment of the present disclosure. As shown in Fig. 7, the device may include a detecting module 72 and a reporting module 74. Each module is briefly described hereinafter.

The detecting module 72 is arranged to periodically detect a remaining downlink bandwidth after usage downlink traffic of a second mode and a first mode, the downlink bandwidth pre-allocated to the first mode and the downlink bandwidth pre-allocated to the second mode.

The reporting module 74 is arranged to periodically report the detected remaining downlink bandwidth, downlink bandwidth pre-allocated to the first mode and downlink bandwidth pre-allocated to the second mode to an RNC. In this embodiment, the remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode.

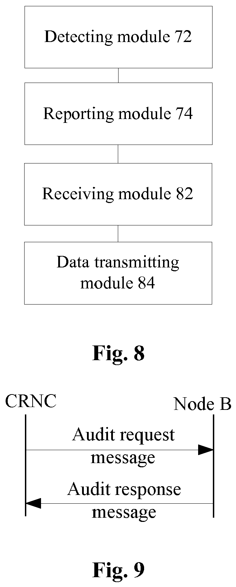

Fig. 8 shows a third block diagram of a device for allocating a downlink bandwidth according to an exemplary embodiment of the present disclosure. As shown in Fig. 8, the device may further include:

a receiving module 82, arranged to receive an adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode, which is sent by the RNC; and
a data transmitting module 84, arranged to transmit data according to the received adjusting result.

Hereinafter, further description is made to the embodiments of the present disclosure in combination with an exemplary embodiment.

The embodiments of the present disclosure provide a dynamic method for allocating a downlink bandwidth for a base station of multi-mode common transmission that contains UMTS. The method not only prevents transmission congestion of mobile backhaul network but also improves the utilization ratio of end-to-end transmission bandwidth resources.

Various modes of a base station of multi-mode common transmission that contains UMTS (denoting another wireless mode with X) share mobile backhaul transmission network. The multi-mode common transmission may refer to a situation in which transmission paths of data streams of various modes in a base station overlap. Operators may plan an end-to-end bandwidth $B_{E2E}$ for a certain base station of multi-mode common transmission according to bandwidth resources of mobile backhaul network, and allocate the bandwidth to the UMTS and X according to the weight of m:n, that is, the bandwidth allocated to the UMTS is $B_{E2E}*m/(m+n)$, while the bandwidth allocated to mode X is $B_{E2E}*n/(m+n)$. On UMTS RNC side, lub transmission path bandwidth configured to the multimode base station=$B_{E2E}*m/(m+n)$. According to the lub transmission path bandwidth, the UMTS RNC conducts transmission bandwidth admission and downlink traffic backpressure. The multimode base station counts the traffic received by mode X within a period of T, then calculates UMTS available bandwidth=$B_{E2E}-S_x$, and records the numerical value in the customized field Available Bandwidth in a Node B Application Part (NBAP) audit response. After receiving a reported value, the RNC calculates the actual bandwidth value according to the following formula, that is, choosing the larger one between available bandwidth and lub transmission path bandwidth as the actual bandwidth.

$$\text{Actual bandwidth=max (available bandwidth, lub transmission path bandwidth)}$$

The RNC conducts downlink traffic backpressure according to the actual bandwidth.

In the embodiment of the present disclosure, downlink traffic $S_x$ generated by periodical monitoring data source 2-mode X by a receiver eNodeB, according to $B_{E2E}$, calculates the available bandwidth of data source 1-UMTS RNC according to the following formula available bandwidth=$B_{E2E}-Sx$, and periodically reports the available bandwidth to the RNC. According to the available bandwidth, the RNC calculates the actual available bandwidth, and conducts admission control and backpressure scheduling according to the bandwidth. Using the technical solution of the exemplary embodiment not only prevents transmission congestion of mobile backhaul network but also improves downlink bandwidth utilization ratio of mobile backhaul network (the downlink bandwidth utilization ratio may reach 100%) and improves users' downlink throughput and user experience.

The embodiment may be applied to a base station of multi-mode common transmission that contains UMTS (denoting another wireless mode as X). The various modes of the base station share mobile backhaul transmission network. The UMTS RNC uses a path bandwidth configured to network elements of the base station as the threshold of transmission admission control and backpressure. The number of UMTS users accessing to a corresponding base station and the downlink throughput of UMTS service increase along with the increase of the path bandwidth. Operators may plan an end-to-end bandwidth $B_{E2E}$ for a certain base station multi-mode common transmission according to bandwidth resources of mobile backhaul network, and allocate the bandwidth to the UMTS and X according to the weight of m:n, that is, the bandwidth allocated to the UMTS is $B_{E2E}*m/(m+n)$, while bandwidth allocated to mode X is $B_{E2E}*n/(m+n)$. On the UMTS RNC side, the lub transmission path bandwidth configured to the multimode base station=$B_{E2E}*m/(m+n)$. According to the lub transmission path bandwidth, the UMTS RNC conducts transmission bandwidth admission and downlink traffic backpressure. The multimode base station may counts the traffic received by mode X within a period of T, then calculates UMTS available bandwidth according to the following formula.

$$\text{Available bandwidth} = B_{E2E} - S_x$$

The multimode base station may record the numerical value in the customized field Available Bandwidth in NBAP audit response. The available bandwidth may be carried through the expansion of NBAP message.

Fig. 9 shows a flowchart of interaction of an lub audit response signal according to an embodiment of the present disclosure. As shown in Fig. 9, the information announcing the UMTS available bandwidth to the UMTS RNC may be included in the audit response message in the figure. An NBAP expansion message may be defined. In 3GPP 25.433 protocol, there is detailed definition for NBAP audit response message. The NBAP audit response message may be expanded by adding an information element OPTIONAL to the end of the audit response message.

The corresponding information element (IE) structure is shown in table 1.

After receiving a reported value, the RNC calculates the actual bandwidth value according to the following manner:

choosing the larger one between the available bandwidth and the lub transmission path bandwidth as the actual bandwidth.

That is, the RNC may calculate the actual bandwidth value according to the following formula:

$$\text{actual bandwidth} = \max(\text{available bandwidth}, \text{lub transmission path bandwidth})$$

The RNC may conduct downlink traffic backpressure according to the actual bandwidth.

Table 1 NodeB TnlPhyport field format

| IE/Group Name | Presence | Range | IE Type and Reference | Semantics Description |
|---|---|---|---|---|
| TNL Port Number | M | 1..<max Physical port in NodeB> | | The number of transmission paths of which bandwidth is changed (or breakdown or the change is recovered) on the NodeB side, and the value is not more than 10. In the scenario of multiple paths, the simultaneous reporting of multiple physical ports is supported |
| >TNL Physical port Field | | | | Specific bandwidth information of each physical port |
| >>Physical port type | M | | ENUMERATED (INVALID, IMA, MLPPP, ETH) | Physical port type: Invalid reserved type IMA port MLPPP port Ethernet port |
| >>TransportLayer Address | M | | Transport Layer Address | Transport layer port identification, which is AAL2 PATH ID in IMA scenario and is IP address in MLPPP or ETH scenario |
| >>Available BandWidth | M | | INTEGER (0.. 0XFFFFFFFF) | Current effective bandwidth of ports, unit: bps |

Hereinafter, a UMTS/LTE multi-mode base station is taken as an example for explanation.

The UMTS and LTE of a UL multi-mode base station share lub/S1 interface for transmission, that is, the path of UMTS downlink data stream overlaps with the transmission path of LTE downlink data stream. Operators may plan an end-to-end bandwidth ($B_{E2E}$=50Mbps) for a certain UL base station according to bandwidth resources of mobile backhaul network, and allocate the bandwidth to the UMTS and the LTE according to the weight of 2:3, that is, the bandwidth allocated to the UMTS is 20Mbps, while the bandwidth allocated to the LTE is 30Mbps. On the UMTS RNC side, lub transmission path bandwidth configured to the UL base station=20Mbps. According to the lub transmission path bandwidth, the UMTS RNC conducts transmission bandwidth admission and downlink traffic backpressure. The UL base station counts the traffic received by the LTE within a period of T (assuming that in a certain moment, SLTE=10Mbps).

Then the UL base station calculates UMTS available bandwidth according to the following formula:

$$\text{available bandwidth} = B_{E2E} - S_{LTE} = 50 - 10 = 40\text{Mbps}.$$

The UL base station records the numerical value in the customized field Available Bandwidth in the NBAP audit response.

After receiving a reported value, the RNC calculates the actual bandwidth value according to the following formula:

$$\text{actual bandwidth} = \max(20, 40) = 40\text{Mbps}$$

The RNC conducts downlink traffic backpressure according to the actual bandwidth.

Compared with statically allocating bandwidth of the UMTS and mode X, the test method in the embodiment can improve transmission bandwidth utilization ratio of mobile backhaul network (the bandwidth utilization ratio may reach 100%) and prevent bandwidth waste. An example is provided below for explaining the effects of the method.

a. In the method for statically allocating bandwidth, the maximum bandwidth used by the UMTS is the bandwidth statically allocated to the UMTS, that is, 20Mbps in the above example. When the downlink traffic of X is 10Mbps, the maximum bandwidth used by the UMTS is still 20Mbps, and the end-to-end bandwidth utilization ratio of mobile backhaul network is only (10+20)/50=60%.

b. After using the method, the bandwidth available to the UMTS is the larger one between the available bandwidth and the lub transmission path bandwidth. When the downlink traffic of mode X is 10Mbps, the UMTS available bandwidth reported by a multimode base station is 40Mbps. The available bandwidth is 40Mbps, the lub transmission path bandwidth is 20Mbps, and the larger value between the two is 40Mbps. The UMTS RNC conducts downlink traffic control based on a bandwidth 40Mbps,. The bandwidth utilization ratio is (10+40)/50=100%.

Obviously, those skilled in the art should recognize that each module or each act of the present disclosure can be realized by a general computing device. They can be collected on a single computing device or distributed on network constituted by multiple computing devices. Alternatively, they can be realized by executable program codes of the computing device so that they can be stored in the storage medium and executed by the computing device. In addition, under certain situation, they can be realized by executing the shown or described acts in a sequence different from the sequence herein, or by respectively making them into various integrated circuit modules, or by making multiple modules or acts among them into a single integrated circuit module. In this way, the present disclosure is not limited to any specific combination of software and hardware.

The above is just the exemplary embodiments of the present disclosure, and is not intended to limit the present disclosure. To those skilled in the art, the present disclosure can have various modifications and changes. Any alteration, equivalent replacement, improvement and so on made within the principle of the present disclosure should fall within the scope of protection defined by the appended claims of the present disclosure.

**Industrial Applicability**

As mentioned above, though the above embodiments and exemplary embodiments, the problems of transmission congestion or bandwidth resource waste existed when different modes of a multimode base station compete to use a downlink bandwidth resource in a related telecommunication technology are solved, and the utilization ratio of the downlink bandwidth is improved while congestion is prevented, thereby achieving the effect of improving user experience.

**Claims**

1. A method for allocating a downlink bandwidth which is an end-to-end, E2E, transmission bandwidth from a Radio Network Controller, RNC, to a multimode base station, where different modes of the multimode base station compete to use the downlink bandwidth, the method comprising:

   acquiring a remaining downlink bandwidth of the base station after usage of downlink traffic of a second mode or a first mode, and acquiring a downlink bandwidth pre-allocated to the first mode and a downlink bandwidth pre-allocated to the second mode (S202); and

   adjusting, according to the remaining downlink bandwidth, the downlink bandwidth pre-allocated to the first mode and the downlink bandwidth pre-allocated to the second mode, a downlink bandwidth allocated to the first mode and a downlink bandwidth allocated to the second mode (S204).

2. The method as claimed in claim 1, wherein adjusting the downlink bandwidth allocated to the first mode and the downlink bandwidth allocated to the second mode (S204) comprises:
   adjusting, based on a predetermined allocation principle according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode.

3. The method as claimed in claim 1, wherein adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode (S204) comprises:

   comparing an amount of the remaining downlink bandwidth after usage of the downlink traffic of the second mode with an amount of the downlink bandwidth pre-allocated to the first mode, and determining a larger amount in a comparison result as the downlink bandwidth allocated to the first mode; or

   comparing an amount of the remaining downlink bandwidth after usage of the downlink traffic of the first mode with an amount of the downlink bandwidth pre-allocated to the second mode, and determining a larger amount in a comparison result as the downlink bandwidth allocated to the second mode.

4. The method as claimed in claim 1, wherein when the adjustment is applied to downlink bandwidth of more than two modes, adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode (S204) comprises:
   comparing an amount of the remaining downlink bandwidth with an amount of the downlink bandwidth pre-allocated to the first mode among the more than two modes, and determining a larger amount in a comparison result as the downlink bandwidth allocated to the first mode.

5. The method as claimed in claim 1, wherein when the adjustment is applied to downlink bandwidth of more than two modes, adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode (S204) comprises:
   judging, according to respective remaining downlink bandwidths after usage of downlink bandwidths under the more than two modes, whether a downlink bandwidth needed by the first mode is smaller than the respective remaining downlink bandwidths after usage of the downlink bandwidths under the more than two modes, and when a judging result is positive, determining a downlink bandwidth, among the respective remaining downlink bandwidths after usage of the downlink bandwidths under the more than two modes, that is closest to the downlink bandwidth needed by the first mode as the downlink bandwidth allocated to the first mode.

6. The method as claimed in claim 1, wherein when the adjustment is applied to downlink bandwidth of more than two modes, adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode (S204) comprises:
   judging, according to respective remaining downlink bandwidths after usage of downlink bandwidths under the more than two modes, whether a downlink bandwidth needed by the first mode is smaller than the respective remaining downlink bandwidths after usage of the downlink bandwidths under the more than two modes, and when a judging result is negative, determining a sum of at least two downlink bandwidths, among the respective remaining downlink bandwidths after usage of the downlink bandwidths under the more than two modes, that is closest to the downlink bandwidth needed by the first mode as the downlink bandwidth allocated to the first mode.

7. A method for allocating a downlink bandwidth which is an end-to-end, E2E, transmission bandwidth from a Radio Network Controller, RNC, to a multimode base station, where different modes of the multimode base station compete to use the downlink bandwidth, the method comprising:

   periodically detecting a remaining downlink bandwidth after usage of downlink traffic of a second mode and a first mode, and periodically detecting a downlink bandwidth pre-allocated to the first mode and a downlink bandwidth pre-allocated to the second mode (S302); and
   periodically reporting the detected remaining downlink bandwidth, downlink bandwidth pre-allocated to the first mode and downlink bandwidth pre-allocated to the second mode to the RNC, wherein the remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode (S304).

8. The method as claimed in claim 7, wherein after reporting the detected remaining downlink bandwidth, downlink bandwidth pre-allocated to the first mode and downlink bandwidth pre-allocated to the second mode to the RNC (S304), the method further comprises:

   receiving an adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode, which is sent by the RNC; and
   transmitting data according to the received adjusting result.

9. A device for allocating a downlink bandwidth which is an end-to-end, E2E, transmission bandwidth from a Radio Network Controller, RNC, to a multimode base station, where different modes of the multimode base station compete to use the downlink bandwidth, the device comprising:

   an acquiring module (42), arranged to acquire a remaining downlink bandwidth of the base station after usage of downlink traffic of a second mode or a first mode, and acquire a downlink bandwidth pre-allocated to the first mode and a downlink bandwidth pre-allocated to the second mode; and
   an adjusting module (44), arranged to adjust, according to the remaining downlink bandwidth, the downlink bandwidth pre-allocated to the first mode and the downlink bandwidth pre-allocated to the second mode, a downlink bandwidth allocated to the first mode and a downlink bandwidth allocated to the second mode.

10. The device as claimed in claim 9, wherein the adjusting module (44) comprises:
   an adjusting sub-module (52), arranged to adjust, based on a predetermined allocation principle according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode.

11. The device as claimed in claim 9 or 10, wherein the adjusting module (44) comprises at least one of:

   a first determining unit (62), arranged to compare an amount of the remaining downlink bandwidth after usage of the downlink traffic of the second mode with an amount of the downlink bandwidth pre-allocated to the first mode, and determine a larger amount in a comparison result as the downlink bandwidth allocated to the first mode; or
   a second determining unit (64), arranged to compare an amount of the remaining downlink bandwidth after usage of the downlink traffic of the first mode with an amount of the downlink bandwidth pre-allocated to the second mode, and determine a larger amount in a comparison result as the downlink bandwidth allocated to the second mode.

12. The device as claimed in claim 9, wherein when the adjustment is applied to downlink bandwidth of more than two modes, the adjusting module (44) is arranged to:
   compare an amount of the remaining downlink bandwidth with an amount of the downlink bandwidth pre-allocated to the first mode among the more than two modes, and determine a larger amount in a comparison result as the downlink bandwidth allocated to the first mode.

**13.** The device as claimed in claim 1, wherein when the adjustment is applied to downlink bandwidth of more than two modes, the adjusting module (44) is arranged to:

judge, according to respective remaining downlink bandwidths after usage of downlink bandwidths under the more than two modes, whether a downlink bandwidth needed by the first mode is smaller than the respective remaining downlink bandwidths after usage of the downlink bandwidths under the more than two modes, and when a judging result is positive, determine a downlink bandwidth, among the respective remaining downlink bandwidths after usage of the downlink bandwidths under the more than two modes, that is closest to the downlink bandwidth needed by the first mode as the downlink bandwidth allocated to the first mode;
or,
judge, according to respective remaining downlink bandwidths after usage of downlink bandwidths under the more than two modes, whether a downlink bandwidth needed by the first mode is smaller than the respective remaining downlink bandwidths after usage of the downlink bandwidths under the more than two modes, and when a judging result is negative, determine a sum of at least two downlink bandwidths, among the respective remaining downlink bandwidths after usage of the downlink bandwidths under the more than two modes, that is closest to the downlink bandwidth needed by the first mode as the downlink bandwidth allocated to the first mode.

**14.** A device for allocating a downlink bandwidth which is an end-to-end, E2E, transmission bandwidth from a Radio Network Controller, RNC to a multimode base station, where different modes of the multimode base station compete to use the downlink bandwidth, comprising:

a detecting module (72), arranged to periodically detect a remaining downlink bandwidth after usage downlink traffic of a second mode and a first mode, and periodically detect a downlink bandwidth pre-allocated to the first mode and a downlink bandwidth pre-allocated to the second mode; and
an reporting module (74), arranged to periodically report the detected remaining downlink bandwidth, downlink bandwidth pre-allocated to the first mode and downlink bandwidth pre-allocated to the second mode to the RNC, wherein the remaining downlink bandwidth, the downlink bandwidth pre-allocated to the first mode and the downlink bandwidth pre-allocated to the second mode are used by the RNC for adjusting a downlink bandwidth allocated to the first mode and a downlink bandwidth allocated to the second mode.

**15.** The device as claimed in claim 14, wherein the device further comprises:

a receiving module (82), arranged to receive an adjusting result of adjusting, according to the remaining downlink bandwidth, the downlink bandwidth pre-allocated to the first mode and the downlink bandwidth pre-allocated to the second mode, the downlink bandwidth allocated to the first mode and the downlink bandwidth allocated to the second mode, which is sent by the RNC; and
a data transmitting module (84), arranged to transmit data according to the received adjusting result.

**Patentansprüche**

**1.** Verfahren zur Zuweisung einer Downlink-Bandbreite, die eine Ende-zu-Ende, E2E,-Übertragungsbandbreite von einer Funknetzwerksteuereinheit, RNC, ist, an eine Multimode-Basisstation, wo verschiedene Modi der Multimode-Basisstation konkurrieren, um die Downlink-Bandbreite zu benutzen, wobei das Verfahren umfasst:

Erfassen einer verbleibenden Downlink-Bandbreite der Basisstation nach Benutzung von Downlink-Verkehr eines zweiten Modus oder eines ersten Modus, und Erfassen einer Downlink-Bandbreite, die dem ersten Modus vorab zugewiesen war, und einer Downlink-Bandbreite, die dem zweiten Modus vorab zugewiesen war (202); und
Einstellen, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, einer Downlink-Bandbreite, die dem ersten Modus zugewiesen war, und einer Downlink-Bandbreite, die dem zweiten Modus zugewiesen war (S204).

**2.** Verfahren nach Anspruch 1, worin das Einstellen der Downlink-Bandbreite, die dem ersten Modus zugewiesen war, und der Downlink-Bandbreite, die dem zweiten Modus zugewiesen war, (S204) umfasst:
Einstellen, aufgrund eines vorbestimmten Zuweisungsprinzips je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war.

3. Verfahren nach Anspruch 1, worin das Einstellen, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war (S204), umfasst:

Vergleichen einer Menge der verbleibenden Downlink-Bandbreite nach Benutzung von Downlink-Verkehr des zweiten Modus mit einer Menge der Downlink-Bandbreite, die dem ersten Modus vorab zugewiesen war, und Bestimmen einer größeren Menge in einem Vergleichsergebnis als die Downlink-Bandbreite, die dem ersten Modus zugewiesen war; oder
Vergleichen einer Menge der verbleibenden Downlink-Bandbreite nach Benutzung von Downlink-Verkehr des ersten Modus mit einer Menge der Downlink-Bandbreite, die dem zweiten Modus vorab zugewiesen war, und Bestimmen einer größeren Menge in einem Vergleichsergebnis als die Downlink-Bandbreite, die dem zweiten Modus zugewiesen war.

4. Verfahren nach Anspruch 1, worin, wenn das Einstellen auf der Downlink-Bandbreite von mehr als zwei Modi angewendet wird, das Einstellen, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war (S204), umfasst:
Vergleichen einer Menge der verbleibenden Downlink-Bandbreite mit einer Menge der Downlink-Bandbreite, die dem ersten Modus vorab zugewiesen war, unter den mehr als zwei Modi, und Bestimmen einer größeren Menge in einem Vergleichsergebnis als die Downlink-Bandbreite, die dem ersten Modus zugewiesen war.

5. Verfahren nach Anspruch 1, worin, wenn das Einstellen auf der Downlink-Bandbreite von mehr als zwei Modi angewendet wird, das Einstellen, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war (S204), umfasst:
Beurteilen, je nach jeweiligen verbleibenden Downlink-Bandbreiten nach Benutzung von Downlink-Bandbreiten unter den mehr als zwei Modi, ob eine Downlink-Bandbreite, die vom ersten Modus benötigt wird, kleiner als die jeweiligen verbleibenden Downlink-Bandbreiten nach Benutzung der Downlink-Bandbreiten unter den mehr als zwei Modi ist, und wenn ein Beurteilungsergebnis positiv ist, Bestimmen einer Downlink-Bandbreite, unter den jeweiligen verbleibenden Downlink-Bandbreiten nach Benutzung der Downlink-Bandbreiten unter den mehr als zwei Modi, die der Downlink-Bandbreite, die vom ersten Modus benötigt wird, am nächsten kommt, als die Downlink-Bandbreite, die dem ersten Modus zugewiesen war.

6. Verfahren nach Anspruch 1, worin, wenn das Einstellen auf der Downlink-Bandbreite von mehr als zwei Modi angewendet wird, das Einstellen, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war (S204), umfasst:
Beurteilen, je nach jeweiligen verbleibenden Downlink-Bandbreiten nach Benutzung von Downlink-Bandbreiten unter den mehr als zwei Modi, ob eine Downlink-Bandbreite, die vom ersten Modus benötigt wird, kleiner als die jeweiligen verbleibenden Downlink-Bandbreiten nach Benutzung der Downlink-Bandbreiten unter den mehr als zwei Modi ist, und wenn ein Beurteilungsergebnis negativ ist, Bestimmen einer Summe von zumindest zwei Downlink-Bandbreiten, unter den jeweiligen verbleibenden Downlink-Bandbreiten nach Benutzung der Downlink-Bandbreiten unter den mehr als zwei Modi, die der Downlink-Bandbreite, die vom ersten Modus benötigt wird, am nächsten kommt, als die Downlink-Bandbreite, die dem ersten Modus zugewiesen war.

7. Verfahren zur Zuweisung einer Downlink-Bandbreite, die eine Ende-zu-Ende, E2E,-Übertragungsbandbreite von einer Funknetzwerksteuereinheit, RNC, ist, an eine Multimode-Basisstation, wo verschiedene Modi der Multimode-Basisstation konkurrieren, um die Downlink-Bandbreite zu benutzen, wobei das Verfahren umfasst:

periodisches Detektieren einer verbleibenden Downlink-Bandbreite nach Benutzung von Downlink-Verkehr eines zweiten Modus und eines ersten Modus, und periodisches Detektieren einer Downlink-Bandbreite, die dem ersten Modus vorab zugewiesen war, und einer Downlink-Bandbreite, die dem zweiten Modus vorab zugewiesen war (S302); und

periodisches Melden der detektierten verbleibenden Downlink-Bandbreite, der Downlink-Bandbreite, die dem ersten Modus vorab zugewiesen war, und der Downlink-Bandbreite, die dem zweiten Modus vorab zugewiesen war, an die Funknetzwerksteuereinheit, worin die verbleibende Downlink-Bandbreite, die Downlink-Bandbreite, die dem ersten Modus vorab zugewiesen war, und die Downlink-Bandbreite, die dem zweiten Modus vorab zugewiesen war, von der Funknetzwerksteuereinheit benutzt werden, um eine Downlink-Bandbreite, die dem ersten Modus zugewiesen war, und eine Downlink-Bandbreite, die dem zweiten Modus zugewiesen war (S304), einzustellen.

8. Verfahren nach Anspruch 7, worin, nach dem Melden der detektierten verbleibenden Downlink-Bandbreite, der Downlink-Bandbreite, die dem ersten Modus vorab zugewiesen war, und der Downlink-Bandbreite, die dem zweiten Modus vorab zugewiesen war, an die Funknetzwerksteuereinheit (S304), das Verfahren ferner umfasst:

Empfangen eines Einstellergebnisses des Einstellens, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war, das von der Funknetzwerksteuereinheit gesandt wird; und
Übertragen von Daten je nach dem empfangenen Einstellergebnis.

9. Vorrichtung zur Zuweisung einer Downlink-Bandbreite, die eine Ende-zu-Ende, E2E,-Übertragungsbandbreite von einer Funknetzwerksteuereinheit, RNC, ist, an eine Multimode-Basisstation, wo verschiedene Modi der Multimode-Basisstation konkurrieren, um die Downlink-Bandbreite zu benutzen, wobei die Vorrichtung umfasst:

ein Erfassungsmodul (42), das dafür ausgelegt ist, eine verbleibende Downlink-Bandbreite der Basisstation nach Benutzung von Downlink-Verkehr eines zweiten Modus oder eines ersten Modus zu erfassen, und eine Downlink-Bandbreite, die dem ersten Modus vorab zugewiesen war, und eine Downlink-Bandbreite, die dem zweiten Modus vorab zugewiesen war, zu erfassen; und
ein Einstellmodul (44), das dafür ausgelegt ist, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, eine Downlink-Bandbreite, die dem ersten Modus zugewiesen war, und eine Downlink-Bandbreite, die dem zweiten Modus zugewiesen war, einzustellen.

10. Vorrichtung nach Anspruch 9, worin das Einstellmodul (44) umfasst:
ein Einstelluntermodul (52), das dafür ausgelegt ist, aufgrund eines vorbestimmten Zuweisungsprinzips je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, die Downlink-Bandbreite, die dem ersten Modus zugewiesen war, und die Downlink-Bandbreite, die dem zweiten Modus zugewiesen war, einzustellen.

11. Vorrichtung nach Anspruch 9 oder 10, worin das Einstellmodul (44) zumindest eine von den folgenden Einheiten umfasst:

eine erste Bestimmungseinheit (62), die dafür ausgelegt ist, eine Menge der verbleibenden Downlink-Bandbreite nach Benutzung von Downlink-Verkehr des zweiten Modus mit einer Menge der Downlink-Bandbreite, die dem ersten Modus vorab zugewiesen war, zu vergleichen und eine größere Menge in einem Vergleichsergebnis als die Downlink-Bandbreite, die dem ersten Modus zugewiesen war, zu bestimmen; oder
eine zweite Bestimmungseinheit (64), die dafür ausgelegt ist, eine Menge der verbleibenden Downlink-Bandbreite nach Benutzung von Downlink-Verkehr des ersten Modus mit einer Menge der Downlink-Bandbreite, die dem zweiten Modus vorab zugewiesen war, zu vergleichen und eine größere Menge in einem Vergleichsergebnis als die Downlink-Bandbreite, die dem zweiten Modus zugewiesen war, zu bestimmen.

12. Vorrichtung nach Anspruch 9, worin, wenn das Einstellen auf der Downlink-Bandbreite von mehr als zwei Modi angewendet wird, das Einstellmodul (44) dafür ausgelegt ist:
eine Menge der verbleibenden Downlink-Bandbreite mit einer Menge der Downlink-Bandbreite, die dem ersten Modus vorab zugewiesen war, unter den mehr als zwei Modi zu vergleichen, und eine größere Menge in einem Vergleichsergebnis als die Downlink-Bandbreite, die dem ersten Modus zugewiesen war, zu bestimmen.

**13.** Vorrichtung nach Anspruch 1, worin, wenn das Einstellen auf der Downlink-Bandbreite von mehr als zwei Modi angewendet wird, das Einstellmodul (44) dafür ausgelegt ist:

je nach jeweiligen verbleibenden Downlink-Bandbreiten nach Benutzung von Downlink-Bandbreiten unter den mehr als zwei Modi zu beurteilen, ob eine Downlink-Bandbreite, die vom ersten Modus benötigt wird, kleiner als die jeweiligen verbleibenden Downlink-Bandbreiten nach Benutzung der Downlink-Bandbreiten unter den mehr als zwei Modi ist, und wenn ein Beurteilungsergebnis positiv ist, eine Downlink-Bandbreite, unter den jeweiligen verbleibenden Downlink-Bandbreiten nach Benutzung der Downlink-Bandbreiten unter den mehr als zwei Modi, die der Downlink-Bandbreite, die vom ersten Modus benötigt wird, am nächsten kommt, als die Downlink-Bandbreite, die dem ersten Modus zugewiesen war, zu bestimmen;
oder
je nach jeweiligen verbleibenden Downlink-Bandbreiten nach Benutzung von Downlink-Bandbreiten unter den mehr als zwei Modi zu beurteilen, ob eine Downlink-Bandbreite, die vom ersten Modus benötigt wird, kleiner als die jeweiligen verbleibenden Downlink-Bandbreiten nach Benutzung der Downlink-Bandbreiten unter den mehr als zwei Modi ist, und wenn ein Beurteilungsergebnis negativ ist, eine Summe von zumindest zwei Downlink-Bandbreiten, unter den jeweiligen verbleibenden Downlink-Bandbreiten nach Benutzung der Downlink-Bandbreiten unter den mehr als zwei Modi, die der Downlink-Bandbreite, die vom ersten Modus benötigt wird, am nächsten kommt, als die Downlink-Bandbreite, die dem ersten Modus zugewiesen war, zu bestimmen.

**14.** Vorrichtung zur Zuweisung einer Downlink-Bandbreite, die eine Ende-zu-Ende, E2E,-Übertragungsbandbreite von einer Funknetzwerksteuereinheit, RNC, ist, an eine Multimode-Basisstation, wo verschiedene Modi der Multimode-Basisstation konkurrieren, um die Downlink-Bandbreite zu benutzen, umfassend:

ein Detektiermodul (72), das dafür ausgelegt ist, eine verbleibende Downlink-Bandbreite nach Benutzung von Downlink-Verkehr eines zweiten Modus und eines ersten Modus periodisch zu detektieren, und eine Downlink-Bandbreite, die dem ersten Modus vorab zugewiesen war, und eine Downlink-Bandbreite, die dem zweiten Modus vorab zugewiesen war, periodisch zu detektieren; und
ein Meldemodul (74), das dafür ausgelegt ist, die detektierte verbleibende Downlink-Bandbreite, die Downlink-Bandbreite, die dem ersten Modus vorab zugewiesen war, und die Downlink-Bandbreite, die dem zweiten Modus vorab zugewiesen war, an die Funknetzwerksteuereinheit periodisch zu melden, worin die verbleibende Downlink-Bandbreite, die Downlink-Bandbreite, die dem ersten Modus vorab zugewiesen war, und die Downlink-Bandbreite, die dem zweiten Modus vorab zugewiesen war, von der Funknetzwerksteuereinheit benutzt werden, um eine Downlink-Bandbreite, die dem ersten Modus zugewiesen war, und eine Downlink-Bandbreite, die dem zweiten Modus zugewiesen war, einzustellen.

**15.** Vorrichtung nach Anspruch 14, worin die Vorrichtung ferner umfasst:

ein Empfangsmodul (82), das dafür ausgelegt ist, ein Einstellergebnis des Einstellens, je nach der verbleibenden Downlink-Bandbreite, der Downlink-Bandbreite, die dem ersten Modus vorab zugewiesen war, und der Downlink-Bandbreite, die dem zweiten Modus vorab zugewiesen war, der Downlink-Bandbreite, die dem ersten Modus zugewiesen war, und der Downlink-Bandbreite, die dem zweiten Modus zugewiesen war, das von der Funknetzwerksteuereinheit gesandt wird, zu empfangen; und
ein Datenübertragungsmodul (84), das dafür ausgelegt ist, Daten je nach dem empfangenen Einstellergebnis zu übertragen.

**Revendications**

**1.** Méthode pour allouer une bande passante de liaison descendante qui est une bande passante de transmission de bout en bout, E2E, d'un contrôleur de réseau radio, RNC, à une station de base multimode, où différents modes de la station de base multimode concourent pour utiliser la bande passante de liaison descendante, la méthode comprenant :

l'acquisition d'une bande passante de liaison descendante restante de la station de base après l'utilisation du trafic de liaison descendante d'un deuxième mode ou d'un premier mode, et l'acquisition d'une bande passante de liaison descendante pré-allouée au premier mode et d'une bande passante de liaison descendante pré-allouée au deuxième mode (S202) ; et
le réglage, en fonction de la bande passante de liaison descendante restante, de la bande passante de liaison descendante pré-allouée au premier mode et de la bande passante de liaison descendante pré-allouée au deuxième mode, une bande passante de liaison descendante étant allouée au premier mode et une bande passante de liaison descendante étant allouée au deuxième mode (S204).

2. Méthode comme revendiquée dans la revendication 1, où le réglage de la bande passante de liaison descendante allouée au premier mode et de la bande passante de liaison descendante allouée au deuxième mode (S204) comprend :

le réglage, sur la base d'un principe d'allocation prédéterminé en fonction de la bande passante de liaison descendante restante, de la bande passante de liaison descendante pré-allouée au premier mode et de la bande passante de liaison descendante pré-allouée au deuxième mode, la bande passante de liaison descendante étant allouée au premier mode et la bande passante de liaison descendante étant allouée au deuxième mode.

3. Méthode comme revendiquée dans la revendication 1, où le réglage, en fonction de la bande passante de liaison descendante restante, de la bande passante de liaison descendante pré-allouée au premier mode et de la bande passante de liaison descendante pré-allouée au deuxième mode, la bande passante de liaison descendante étant allouée au premier mode et la bande passante de liaison descendante étant allouée au deuxième mode (S204) comprend :

la comparaison d'une quantité de la bande passante de liaison descendante restante après l'utilisation du trafic de liaison descendante du deuxième mode avec une quantité de la bande passante de liaison descendante pré-allouée au premier mode, et la détermination d'une quantité plus grande dans un résultat de comparaison comme la bande passante de liaison descendante allouée au premier mode ; ou
la comparaison d'une quantité de la bande passante de liaison descendante restante après l'utilisation du trafic de liaison descendante du premier mode avec une quantité de la bande passante de liaison descendante pré-allouée au deuxième mode, et la détermination d'une quantité plus grande dans un résultat de comparaison comme la bande passante de liaison descendante allouée au deuxième mode.

4. Méthode comme revendiquée dans la revendication 1, où lorsque le réglage est appliqué à la bande passante de liaison descendante de plus de deux modes, le réglage, en fonction de la bande passante de liaison descendante restante, de la bande passante de liaison descendante pré-allouée au premier mode et de la bande passante de liaison descendante pré-allouée au deuxième mode, la bande passante de liaison descendante étant allouée au premier mode et la bande passante de liaison descendante étant allouée au deuxième mode (S204) comprend :
la comparaison d'une quantité de la bande passante de liaison descendante restante avec une quantité de la bande passante de liaison descendante pré-allouée au premier mode parmi plus de deux modes, et la détermination d'une quantité plus grand dans un résultat de comparaison comme la bande passante de liaison descendante allouée au premier mode.

5. Méthode comme revendiquée dans la revendication 1, où lorsque le réglage est appliqué à la bande passante de liaison descendante de plus de deux modes, le réglage, en fonction de la bande passante de liaison descendante restante, de la bande passante de liaison descendante pré-allouée au premier mode et de la bande passante de liaison descendante pré-allouée au deuxième mode, la bande passante de liaison descendante étant allouée au premier mode et la bande passante de liaison descendante étant allouée au deuxième mode (S204) comprend :
l'évaluation, en fonction des respectives bandes passantes de liaison descendante restantes après l'utilisation des bandes passantes de liaison descendante sous plus de deux modes, si une bande passante de liaison descendante requise par le premier mode est plus petite que les respectives bandes passantes de liaison descendante restantes après l'utilisation des bandes passantes de liaison descendante sous plus de deux modes, et lorsqu'un résultat d'évaluation est positif, la détermination si une bande passante de liaison descendante, parmi les respectives bandes passantes de liaison descendante restantes après l'utilisation des bandes passantes de liaison descendante sous plus de deux modes, qui est la plus proche de la bande passante de liaison descendante requise par le premier mode comme bande passante de liaison descendante allouée au premier mode.

6. Méthode comme revendiquée dans la revendication 1, où lorsque le réglage est appliqué à la bande passante de liaison descendante de plus de deux modes, le réglage, en fonction de la bande passante de liaison descendante restante, de la bande passante de liaison descendante pré-allouée au premier mode et de la bande passante de liaison descendante pré-allouée au deuxième mode, la bande passante de liaison descendante étant allouée au premier mode et la bande passante de liaison descendante étant allouée au deuxième mode (S204) comprend :

l'évaluation, en fonction des respectives bande passantes de liaison descendante restantes après l'utilisation des bandes passantes de liaison descendante sous plus de deux modes, si une bande passante de liaison descendante

requise par le premier mode est plus petite que les respectives bandes passantes de liaison descendante restantes après l'utilisation des bandes passantes de liaison descendante sous plus de deux modes, et lorsqu'un résultat d'évaluation est négatif, la détermination d'une somme d'au moins deux bandes passantes de liaison descendante, parmi les respectives bandes passantes de liaison descendante restantes après l'utilisation des bandes passantes de liaison descendante sous plus de deux modes, qui est la plus proche de la bande passante de liaison descendante requise par le premier mode comme bande passante de liaison descendante allouée au premier mode.

7. Méthode pour allouer une bande passante de liaison descendante qui est une bande passante de transmission de bout en bout, E2E, d'un contrôleur de réseau radio, RNC, à une station de base multimode, où différents modes de la station de base multimode concourent pour utiliser la bande passante de liaison descendante, la méthode comprenant :

la détection périodique d'une bande passante de liaison descendante restante après l'utilisation du trafic de liaison descendante d'un deuxième mode et d'un premier mode, et la détection périodique d'une bande passante de liaison descendante pré-allouée au premier mode et d'une bande passante de liaison descendante pré-allouée au deuxième mode (S302) ; et

le rapport périodique de la bande passante de liaison descendante restante détectée, de la bande passante de liaison descendante pré-allouée au premier mode et de la bande passante de liaison descendante pré-allouée au deuxième mode au RNC, où la bande passante de liaison descendante restante, la bande passante de liaison descendante pré-allouée au premier mode et la bande passante de liaison descendante pré-allouée au deuxième mode sont utilisée par le RNC pour régler une bande passante de liaison descendante allouée au premier mode et une bande passante de liaison descendante allouée au deuxième mode (S304).

8. Méthode comme revendiquée dans la revendication 7, où après le rapport de la bande passante de liaison descendante restante détectée, de la bande passante de liaison descendante pré-allouée au premier mode et de la bande passante de liaison descendante pré-allouée au deuxième mode au RNC (S304), la méthode comprend aussi :

la réception d'un résultat de réglage pour régler, en fonction de la bande passante de liaison descendante restante, la bande passante de liaison descendante pré-allouée au premier mode et la bande passante de liaison descendante pré-allouée au deuxième mode, la bande passante de liaison descendante étant allouée au premier mode et la bande passante de liaison descendante étant allouée au deuxième mode, qui est envoyé par le RNC ; et

la transmission des données en fonction du résultat de réglage reçu.

9. Dispositif pour allouer une bande passante de liaison descendante qui est une bande passante de transmission de bout en bout, E2E, d'un contrôleur de réseau radio, RNC, à une station de base multimode, où différents modes de la station de base multimode concourent pour utiliser la bande passante de liaison descendante, le dispositif comprenant :

un module d'acquisition (42) disposé pour acquérir une bande passante de liaison descendante restante de la station de base après l'utilisation du trafic de liaison descendante d'un deuxième mode ou d'un premier mode, et acquérir une bande passante de liaison descendante pré-allouée au premier mode et une bande passante de liaison descendante pré-allouée au deuxième mode ; et

un module de réglage (44) disposé pour régler, en fonction de la bande passante de liaison descendante restante, la bande passante de liaison descendante pré-allouée au premier mode et la bande passante de liaison descendante pré-allouée au deuxième mode, une bande passante de liaison descendante étant allouée au premier mode et une bande passante de liaison descendante étant allouée au deuxième mode.

10. Dispositif comme revendiqué dans la revendication 9, où le module de réglage (44) comprend :
un sous-module de réglage (52) disposé pour régler, sur la base d'un principe d'allocation prédéterminé en fonction de la bande passante de liaison descendante restante, la bande passante de liaison descendante pré-allouée au premier mode et la bande passante de liaison descendante pré-allouée au deuxième mode, la bande passante de liaison descendante étant allouée au premier mode et la bande passante de liaison descendante étant allouée au deuxième mode.

**11.** Dispositif comme revendiqué dans la revendication 9 ou 10, où le module de réglage (44) comprend au moins un entre :

une première unité de détermination (62) disposée pour comparer une quantité de la bande passante de liaison descendante restante après l'utilisation du trafic de liaison descendante du deuxième mode avec une quantité de la bande passante de liaison descendante pré-allouée au premier mode, et déterminer une quantité plus grande dans un résultat de comparaison comme la bande passante de liaison descendante allouée au premier mode ; ou

une deuxième unité de détermination (64) disposée pour comparer une quantité de la bande passante de liaison descendante restante après l'utilisation du trafic de liaison descendante du premier mode avec une quantité de la bande passante de liaison descendante pré-allouée au deuxième mode, et déterminer une quantité plus grande dans un résultat de comparaison comme la bande passante de liaison descendante allouée au deuxième mode.

**12.** Dispositif comme revendiqué dans la revendication 9, où lorsque le réglage est appliqué à la bande passante de liaison descendante de plus de deux modes, le module de réglage (44) est disposé pour :
comparer une quantité de la bande passante de liaison descendante restante avec une quantité de la bande passante de liaison descendante pré-allouée au premier mode parmi plus de deux modes, et déterminer une quantité plus grand dans un résultat de comparaison comme la bande passante de liaison descendante allouée au premier mode.

**13.** Dispositif comme revendiqué dans la revendication 1, où lorsque le réglage est appliqué à la bande passante de liaison descendante de plus de deux modes, le module de réglage (44) est disposé pour :

évaluer, en fonction des respectives bandes passantes de liaison descendante restantes après l'utilisation des bandes passantes de liaison descendante sous plus de deux modes, si une bande passante de liaison descendante requise par le premier mode est plus petite que les respectives bandes passantes de liaison descendante restantes après l'utilisation des bandes passantes de liaison descendante sous plus de deux modes, et lorsqu'un résultat d'évaluation est positif, déterminer si une bande passante de liaison descendante, parmi les respectives bandes passantes de liaison descendante restantes après l'utilisation des bandes passantes de liaison descendante sous plus de deux modes, qui est la plus proche de la bande passante de liaison descendante requise par le premier mode comme bande passante de liaison descendante allouée au premier mode ; ou,

évaluer, en fonction des respectives bandes passantes de liaison descendante restantes après l'utilisation des bandes passantes de liaison descendante sous plus de deux modes, si une bande passante de liaison descendante requise par le premier mode est plus petite que les respectives bandes passantes de liaison descendante restantes après l'utilisation des bandes passantes de liaison descendante sous plus de deux modes, et lorsqu'un résultat d'évaluation est négatif, déterminer une somme d'au moins deux bandes passantes de liaison descendante, parmi les respectives bandes passantes de liaison descendante restantes après l'utilisation des bandes passantes de liaison descendante sous plus de deux modes, qui est la plus proche de la bande passante de liaison descendante requise par le premier mode comme bande passante de liaison descendante allouée au premier mode.

**14.** Dispositif pour allouer une bande passante de liaison descendante qui est une bande passante de transmission de bout en bout, E2E, d'un contrôleur de réseau radio, RNC, à une station de base multimode, où différents modes de la station de base multimode concourent pour utiliser la bande passante de liaison descendante, comprenant :

un module de détection (72) disposé pour détecter périodiquement une bande passante de liaison descendante restante après l'utilisation du trafic de liaison descendante d'un deuxième mode et d'un premier mode, et détecter périodiquement une bande passante de liaison descendante pré-allouée au premier mode et une bande passante de liaison descendante pré-allouée au deuxième mode ; et

un module de rapport (74) disposé pour rapporter périodiquement la bande passante de liaison descendante restante détectée, la bande passante de liaison descendante pré-allouée au premier mode et la bande passante de liaison descendante pré-allouée au deuxième mode au RNC, où la bande passante de liaison descendante restante, la bande passante de liaison descendante pré-allouée au premier mode et la bande passante de liaison descendante pré-allouée au deuxième mode sont utilisée par le RNC pour régler une bande passante de liaison descendante allouée au premier mode et une bande passante de liaison descendante allouée au deuxième mode.

**15.** Dispositif comme revendiqué dans la revendication 14, où le dispositif comprend aussi :

un module de réception (82) disposé pour recevoir un résultat de réglage pour régler, en fonction de la bande passante de liaison descendante restante, la bande passante de liaison descendante pré-allouée au premier mode et la bande passante de liaison descendante pré-allouée au deuxième mode, la bande passante de liaison descendante étant allouée au premier mode et la bande passante de liaison descendante étant allouée au deuxième mode, qui est envoyé par le RNC ; et
un module de transmission de données (84), disposé pour transmettre des données en fonction du résultat de réglage reçu.

**Fig. 1**

| Acquire a remaining downlink bandwidth of a base station after usage of downlink traffic of a second mode or a first mode, a downlink bandwidth pre-allocated to the first mode and a downlink bandwidth pre-allocated to the second mode | S202 |

| Adjust, according to the remaining downlink bandwidth, the downlink bandwidth pre-allocated to the first mode and the downlink bandwidth pre-allocated to the second mode, a downlink bandwidth allocated to the first mode and a downlink bandwidth allocated to the second mode | S204 |

**Fig. 2**

| Periodically detect a remaining downlink bandwidth after usage downlink traffic of a second mode and a first mode, a downlink bandwidth pre-allocated to a first mode and a downlink bandwidth pre-allocated to a second mode | S302 |

| Periodically report the detected remaining downlink bandwidth, downlink bandwidth pre-allocated to the first mode and downlink bandwidth pre-allocated to the second mode to an RNC | S304 |

**Fig. 3**

Acquiring module 42

Adjusting module 44

**Fig. 4**

Acquiring module 42

Adjusting module 44

Adjusting
submodule 52

**Fig. 5**

Acquiring module 42

Adjusting module 44

Adjusting
submodule
52

First determining unit 62

Second determining unit 64

**Fig. 6**

Detecting module 72

Reporting module 74

**Fig. 7**

Detecting module 72

Reporting module 74

Receiving module 82

Data transmitting module 84

**Fig. 8**

CRNC                    Node B

Audit request
message

Audit response
message

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013272130 A1